# EUROPÄISCHE PATENTSCHRIFT

(11) **EP 2 315 717 B1**
(45) Veröffentlichungstag und Bekanntmachung des Hinweises auf die Patenterteilung: **10.07.2013**
(21) Anmeldenummer: 09781419.8
(22) Anmeldetag: 03.08.2009
(51) Int. Cl.: B66B 5/00, B66D 5/30

(54) **VERFAHREN ZUM ÜBERWACHEN EINES BREMSSYSTEMS IN EINER AUFZUGSANLAGE UND ENTSPRECHENDER BREMSMONITOR FÜR EINE AUFZUGSANLAGE**
METHOD FOR MONITORING A BRAKING SYSTEM IN A LIFT ASSEMBLY AND CORRESPONDING BRAKE MONITOR FOR A LIFT ASSEMBLY
PROCÉDÉ DE SURVEILLANCE D'UN SYSTÈME DE FREIN DANS UNE INSTALLATION D'ASCENSEUR ET MONITEUR DE FREIN CORRESPONDANT POUR UNE INSTALLATION D'ASCENSEUR

(30) Priorität: 18.08.2008 EP 08162550
(43) Veröffentlichungstag der Anmeldung: 04.05.2011
(73) Patentinhaber: Inventio AG, 6052 Hergiswil (CH)
(72) Erfinder: DORSCH, Andreas, CH-6006 Luzern (CH); HENNEAU, Philippe, CH-8005 Zürich (CH)
(74) Vertreter: Blöchle, Hans
(86) Internationale Anmeldenummer: PCT/EP2009/060028
(87) Internationale Veröffentlichungsnummer: WO 2010/020533

(56) Entgegenhaltungen:
- EP-A- 0 502 282
- DE-U1- 29 921 230

## Beschreibung

Die Erfindung betrifft ein Verfahren zum Betreiben eines Bremsmonitors in einer Aufzugsanlage und einen entsprechenden Bremsmonitor. Ausserdem betrifft die Erfindung ein Verfahren zum Nachrüsten oder Modernisieren einer existierenden Aufzugsanlage mit einem solchen Bremsmonitor.

Aufzugssysteme herkömmlicher Art weisen im Allgemeinen einen Antrieb, eine dem Antrieb zugeordneten Antriebssteuerung und ein Bremssystem auf. Nach und nach werden existierende Aufzugsanlagen modernisiert, um die Energieeffizienz zu verbessern, um die Sicherheit zu erhöhen und um die neusten Betriebszulassungsbedingungen zu erfüllen.

Bei der Modernisierung wird insbesondere der Sicherheitsaspekt gross geschrieben und es werden oft die Antriebsmaschine und/oder die Antriebssteuerung ersetzt. Als neue Antriebssteuerung wird üblicherweise eine VVVF (variable voltage variable frequency; Steuerung mit variabler Spannung und variabler Frequenz) oder eine ACVF (alternating current variable frequency; Wechselstromsteuerung mit variabler Frequenz) eingesetzt. Als neue Antriebsmaschine kann vorteilhafterweise eine Schindler SGB 142 Antriebsmaschine eingesetzt werden. Bei dieser Schindler SGB 142 Antriebsmaschine erfüllt die Haltebremse die Vorgaben der Sicherheitsvorschriften und es muss keine zusätzliche Seilbremse oder Fangvorrichtung mehr vorgesehen werden. Voraussetzung ist allerdings, dass die Haltebremse der neu installierten Antriebsmaschine entsprechend überwacht wird.

Auch bei neuen Aufzugsanlagen gibt es einen Bedarf zur besseren Überwachung der Bremssysteme.

Die Haltebremsen können abgenutzt werden, wenn sich diese beim Anfahren der Antriebsmaschine nicht richtig lösen. Ausserdem kann sich bei festsitzenden Bremsen Rauch entwickeln, was unter Umständen zu einer Gefährdung der Passagiere führen kann. Die Rauchentwicklung kann entstehen, weil die Antriebsmaschine häufig genügend Antriebsmoment aufweist, um auch bei festsitzenden Bremsen den Fahrbetrieb zu gewährleisten.

Eine beispielhafte Einrichtung zum Überwachen einer Aufzugssteuerung ist der Patentschriften EP 903 314 B1 und EP 0 502 282 A1 zu entnehmen.

Es stellt sich daher die Aufgabe eine entsprechende Überwachungslösung für Aufzugsanlagen, z.B. für modernisierte Aufzugsanlagen mit neu installierter Antriebsmaschine, vorzusehen, die es ermöglicht die Haltebremse zu überwachen.

Da existierende Aufzugsanlagen aber auch dadurch modernisiert werden können, dass die Haltebremse einer vorhandenen Antriebsmaschine überwacht wird, wird es als Aufgabe der vorliegenden Erfindung angesehen auch für derartige Situationen eine Überwachungslösung zu entwickeln. Die gesuchte Überwachungslösung soll generell auch für neue Aufzugsanlage einsetzbar sein.

Vorzugsweise sollte die Überwachungslösung daher universell einsetzbar und flexibel ausgelegt sein, um ein und dieselbe Überwachungslösung in den verschiedensten Aufzugsanlagen einsetzen zu können. Vorzugsweise sollte die Überwachungslösung so ausgelegt sein, dass mit einigen wenigen manuellen Umstellungen und/oder Umprogrammierungen eine Anpassung an die jeweils vorhandene Situation vorgenommen werden kann.

Gemäss Erfindung wird ein Verfahren bereit gestellt, das sich durch die folgenden Schritte auszeichnet. Es werden ein erstes Bremslösesignal des Bremssystems und ein erstes Fahrsignal der Antriebssteuerung empfangen. Dann wird überwacht, ob nach dem Anlegen des ersten Fahrsignals ein erstes Bremslösesignal anliegt, wobei dieses Bremslösesignal auftritt, wenn eine Bremse des Bremssystems gelöst wurde. Falls dieses Bremslösesignal nicht innerhalb eines Zeitfensters auftritt, dann wir ein Relaiskreis zum Unterbrechen eines Sicherheitskreises der Aufzugsanlage aktiviert, oder es wird eine Steuerspannung der Antriebssteuerung unterbrochen, um die Aufzugsanlage still zu setzen.

Gemäss Erfindung wird ein Bremsmonitor bereit gestellt, der einen ersten Bremssignaleingang aufweist, um den Bremsmonitor mit einem ersten elektrischen Bremskontakt des Bremssystems zu verbinden. Weiterhin ist ein Fahrsignaleingang vorgesehen, um den Bremsmonitor mit einer ersten elektrischen Fahrsignalleitung der Antriebssteuerung zu verbinden. Der Bremsmonitor umfasst eine Spannungsversorgung, um den Bremsmonitor mit mindestens einer Betriebsspannung zu versehen, einen Mikroprozessor, sowie einen Relaiskreis. Der Relaiskreis ist so ausgelegt, dass durch den Mikroprozessor der Relaiskreis aktivierbar ist, um durch das Aktivieren des Relaiskreises einen Sicherheitskreis der Aufzugsanlage oder eine Steuerspannung der Antriebssteuerung zu unterbrechen, um somit die Aufzugsanlage sofort oder nach einer Verzögerungsphase still zu setzen.

Vorteilhafte Weiterbildungen des erfindungsgemässen Aufzugssystems sind durch die abhängigen Patentansprüche definiert.

In einer bevorzugten Ausführungsform ist der erfindungsgemässe Bremsmonitor so ausgelegt, dass er sowohl in Gleichstrom- als auch in Wechselstromaufzugsanlagen einsetzbar ist.

Im Folgenden wird die Erfindung anhand von Ausführungsbeispielen und mit Bezug auf die Figuren ausführlich beschrieben. Es zeigen:
- Fig. 1: eine Aufzugsanlage mit einem ersten Bremsmonitor gemäss Erfindung, in stark vereinfachter schematisierter Darstellung;
- Fig. 2: Details eines zweiten Bremsmonitors gemäss Erfindung, in stark vereinfachter schematisierter Darstellung;
- Fig. 3: Details eines dritten Bremsmonitors gemäss Erfindung, in stark vereinfachter schematisierter Darstellung;
- Fig. 4: Details eines Schnittstellenblocks gemäss Erfindung, der Teil eines Bremsmonitors sein kann;
- Fig. 5: Details eines weiteren Schnittstellenblocks gemäss Erfindung, der Teil eines Bremsmonitors sein kann;
- Fig. 6: Details eines Relaiskreises gemäss Erfindung, der Teil eines Bremsmonitors sein kann;
- Fig. 7: ein Flussdiagramm, das Details eines erfindungsgemässen Verfahrens zeigt;
- Fig. 8: ein Flussdiagramm, das Details eines weiteren erfindungsgemässen Verfahrens zeigt.

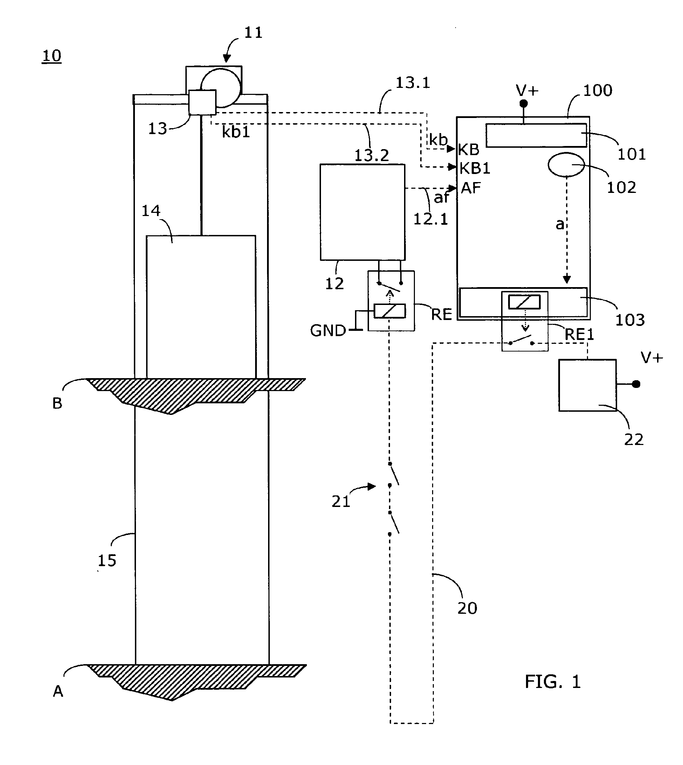

Fig. 1 zeigt eine erste Ausführungsform der Erfindung. Es ist eine Aufzugsanlage 10 in stark schematisierter Form gezeigt. Die Aufzugsanlage 10 umfasst eine Aufzugkabine 14, die in einem Aufzugschacht 15 vertikal bewegbar geführt ist. Die Aufzugkabine 14 kann mehrere Stockwerke (hier sind zwei Stockwerke A und B gezeigt) bedienen. Die Aufzugskabine 14 kann durch einen Antrieb 11 bewegt werden, der sich zum Beispiel, wie in Fig. 1 angedeutet, am oberen Schachtende befindet. Neben dem Antrieb 11 weist die Aufzugsanlage 10 eine dem Antrieb 11 zugeordnete Antriebssteuerung 12 und ein Bremssystem 13 auf. Die Verknüpfung der Antriebssteuerung 12 mit den Elementen der Aufzugsanlage 10 ist nicht gezeigt. Typischerweise jedoch empfängt die Antriebssteuerung 12 Signale. Diese Signale werden umgesetzt in Steuergrössen. Wenn der Antrieb 11 die Aufzugskabine 14 in Bewegung versetzt, löst das Bremssystem 13 die (Halte-)Bremse(n). Beim Erreichen eines Zielstockwerks (z.B. Stockwerk B in Fig. 1), wird die Geschwindigkeit des Antriebs 11 zurück gefahren und die (Halte-)Bremse(n) des Bremssystems 13 treten in Aktion, um die Aufzugskabine 14 auf der richtigen Höhe zu stoppen und dort zu halten.

Da existierende Aufzugsanlagen häufig keine entsprechende Überwachungslösung anbieten, die eingesetzt werden könnte, um das Funktionieren der (Halte-)Bremse(n) zu überwachen, wird ein erfindungsgemässer Bremsmonitor 100 eingesetzt, der einen ersten Bremssignaleingang KB aufweist, um den Bremsmonitor 100 mit einem ersten elektrischen Bremskontakt K1 (nicht gezeigt) des Bremssystems 13 über eine Bremssignalleitung 13.1 verbinden zu können. Weiterhin weist der Bremsmonitor 100 einen Fahrsignaleingang AF auf, um den Bremsmonitor 100 über eine Fahrsignalleitung 12.1 mit einem ersten elektrischen Fahrsignalkontakt der Antriebssteuerung 12 verbinden zu können.

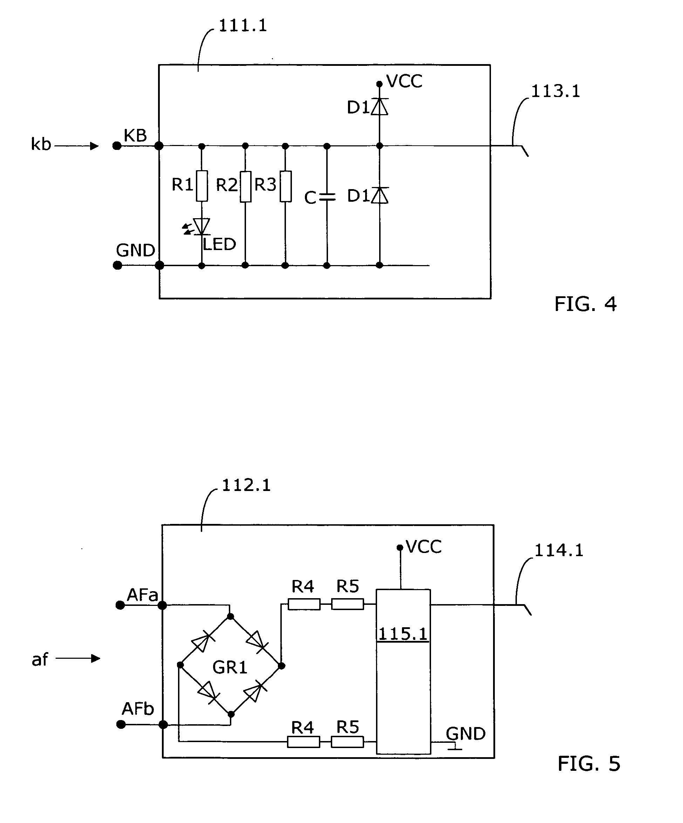

Um den Bremsmonitor 100 mit mindestens einer Betriebsspannung VCC (cf. Fig. 4) zu versehen, ist eine Spannungsversorgung 101 vorhanden. Die Spannungsversorgung 101 wird mit mindestens einer Spannungsversorgung (z.B. V+ in Fig. 1) der Aufzugsanlage 10 verbunden und durch die entsprechende Versorgungsspannung gespeist. Ausserdem umfasst der Bremsmonitor 100 einen Mikroprozessor 102, sowie einen Relaiskreis 103. Dieser Relaiskreis 103 ist so ausgelegt, dass durch den Mikroprozessor 102 der Relaiskreis aktivierbar ist, um durch das Aktivieren des Relaiskreises 103 einen Sicherheitskreis 20 der Aufzugsanlage 10 oder eine Steuerspannung der Antriebssteuerung 12 zu unterbrechen. Der Sicherheitskreis 20, der zum Beispiel durch die Aufzugskabine 14 und den Aufzugsschacht 15 geschlauft wird, weist mehrere Kontakte 21, beispielsweise an den Schachttüren, auf. In Fig. 1 ist eine mögliche Ausführungsform eines Sicherheitskreises 20 gezeigt. Der Sicherheitskreis 20 umfasst einen Spannungsregler 22 und wird mit mindestens einer Spannungsversorgung (V+ in Fig. 1) der Aufzugsanlage 10 verbunden und durch diese gespeist. Eine Spannung, die von dem Spannungsregler 22 bereit gestellt wird, liegt an dem Sicherheitsrelais RE an, falls alle Kontakte 21, sowie das Relais RE1 geschlossen sind. Falls durch eine Störung in der Aufzugsanlage (z.B. durch einen Störung des Bremssystems 13, die von dem Bremsmonitor 100 detektiert wurde) der Sicherheitskreis unterbrochen wird, schaltet das Relais RE und legt über die Aufzugssteuerung 12 die Aufzugsanlage still.

An dieser Stelle sei angemerkt, dass es verschiedene andere Arten der Konfiguration und Beschaltung des Sicherheitskreises gibt. Die Beschaltung hängt dabei im Wesentlichen davon ab, ob Relais verwendet werden, die normal offen (normally open) oder normal geschlossen (normally closed) sind.

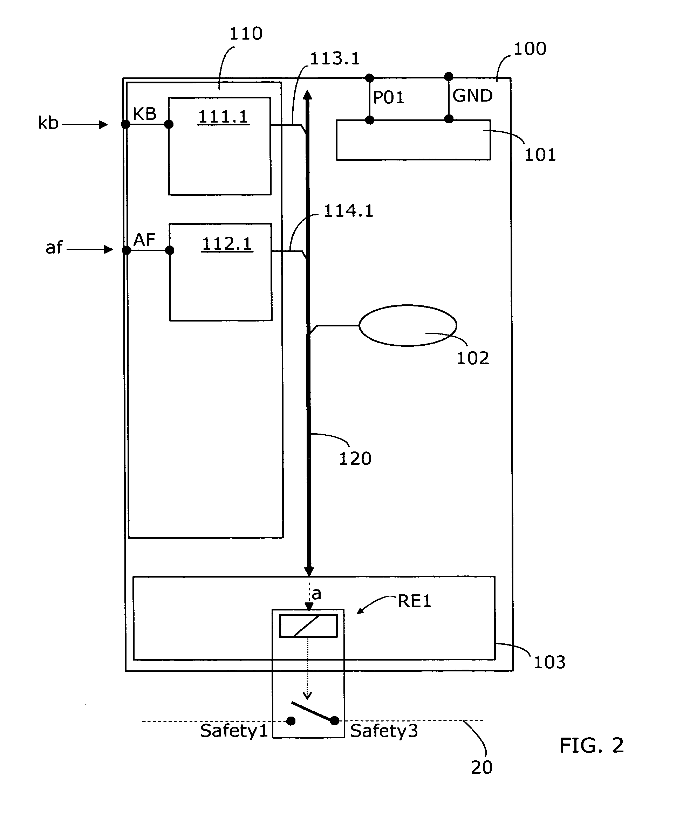

Der Sicherheitskreis 20 ist auch in den Figuren 2, 3 und 6 rein schematisch dargestellt.

Die Aktivierung des Relaiskreises 103 durch den Mikroprozessor 102 ist in Fig. 1 durch das Signal a und einen gestrichelten Pfeil angedeutet. Durch das Aktivieren des Relaiskreises 103 kann die Aufzugsanlage 10 sicher und zuverlässig still gesetzt werden, falls der Bremsmonitor 100 Probleme detektiert.

In einem Ausführungsbeispiel handelt es sich bei dem Bremsmonitor 100 um eine separate Schaltung oder Baugruppe, die nachträglich oder zusätzlich montiert/installiert werden kann. Die Schaltung oder Baugruppe ist mit Befestigungsmitteln versehen und sie weist elektrische Kontakte und/oder Stecker auf, um die Verbindung zu den (Brems- und/oder Fahr-) Kontakten des Bremssystems 13 und der Antriebssteuerung 12 herstellen zu können.

In Fig. 2 sind Details eines zweiten Bremsmonitors 100 gezeigt. Es handelt sich um eine schematische Blockdarstellung der wesentlichen Schaltungselemente. Eingangsseitig weist der Bremsmonitor 100 eine Verbindungsstufe 110 auf. Diese Verbindungsstufe 110 hat zwei oder mehr Schnittstellenblöcke 111.1, 112.1. Der Schnittstellenblock 111.1 empfängt vom ersten Bremssignaleingang KB ein Bremslösesignal kb. Dieses Bremslösesignal kb wird vorzugsweise mittels einer Spannungsanpassungsschaltung, die Teil des Schnittstellenblocks 111.1 ist, umgewandelt in die Versorgungsspannung (z.B. 5 V) des Bremsmonitors 100. Der Schnittstellenblock 111.1 kann auch eine optionale Diodenschaltung umfassen, um Spannungsspitzen des Bremslösesignals kb heraus zu filtern. Der Schnittstellenblock 111.1 kann auch eine optionale Optokopplerschaltung umfassen, um für eine galvanische Trennung zwischen dem ersten Bremssignaleingang KB und der Ausgangsseite 113.1. des Schnittstellenblocks 111.1 zu sorgen.

Der Schnittstellenblock 112.1 empfängt vom ersten Fahrsignaleingang AF ein Fahrsignal af. Dieses Fahrsignal af wird vorzugsweise mittels einer Spannungsanpassungsschaltung, die Teil des Schnittstellenblocks 112.1 ist, umgewandelt in die Versorgungsspannung (z.B. 5 V) des Bremsmonitors 100. Der Schnittstellenblock 112.1 kann auch einen optionalen Gleichrichter umfassen (wie zum Beispiel in Fig. 5 gezeigt), um ein Wechselspannungs-Fahrsignal af umzuwandeln in ein Gleichspannungssignal. Der Schnittstellenblock 112.1 kann auch eine optionale Optokopplerschaltung umfassen, um für eine galvanische Trennung zwischen dem ersten Fahrsignaleingang AF und der Ausgangsseite 114.1 des Schnittstellenblocks 112.1 zu sorgen.

Die Ausgangsseiten 113.1, 114.1 der Schnittstellenblöcke 111.1, 112.1 sind vorzugsweise mit einem (Input/Output-) Bussystem 120 des Bremsmonitors 100 verbunden.

Weiterhin umfasst der Bremsmonitor 100 einen Relaiskreis 103, der so ausgelegt ist, dass durch den Mikroprozessor 102 der Relaiskreis (über ein Steuersignal a, das über das Bussystem 120 übertragbar ist) aktivierbar ist, um durch das Aktivieren des Relaiskreises 103 den Sicherheitskreis 20 der Aufzugsanlage 10, oder eine Steuerspannung der Antriebssteuerung 12, zu unterbrechen, um somit die Aufzugsanlage 10 sofort oder nach einer Verzögerung still zu setzen. Der Relaiskreis 103 umfasst zu diesem Zweck mindestens ein Relais RE1, das mittels des Steuersignals a geschaltet werden kann. Vorzugsweise ist das Relais RE1 ausgangsseitig in den Sicherheitskreis 20 der Aufzugsanlage 10 integriert oder so mit einer Steuerspannungsleitung verbunden, dass der Sicherheitskreis 20 nur dann geschlossen ist (d.h. die Aufzugsanlage 10 in Funktion ist), wenn der Mikroprozessor 102 keinen Fehler detektiert (d.h. wenn kein Steuersignal a anliegt) und wenn alle anderen Komponenten des Bremsmonitors 100 fehlerfrei arbeiten. Beim Auftreten eines Fehlers in dem Bremsmonitor 100, oder falls der Mikroprozessor 102 einen Fehler am Bremssystem 13 detektiert, dann öffnet das Relais RE1 automatisch, und der Fahrbetrieb der Aufzugsanlage 10 ist/wird unterbrochen. In Fig. 2 ist das Relais RE1 im geöffneten Zustand gezeigt und der Sicherheitskreis 20 ist durch den Bremsmonitor 100 unterbrochen.

Besonders bevorzugt ist eine Ausführungsform, bei der zwei in Serie geschaltete Relais im Relaiskreis 103 zum Einsatz kommen. Damit werden die Redundanz und somit auch die Sicherheit erhöht. Besonders bevorzugt sind sogenannte Sicherheitsrelais. Der Relaiskreis 103 umfasst pro Relais vorzugsweise einen Schalttransistor, um das Steuersignal a (vorzugsweise ein Signal im Bereich der 5 V Versorgungsspannung), das über das Bussystem 120 übertragen wird, umzuwandeln in ein Schaltsignal (vorzugsweise ein Signal im Bereich der 24 V Versorgungsspannung) für die Relais.

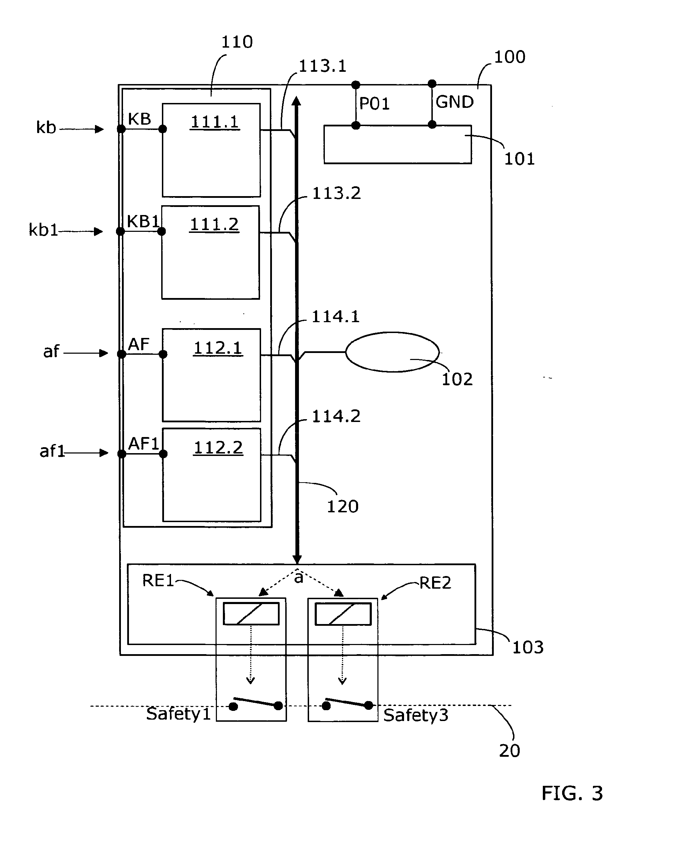

In Fig. 3 sind Details eines dritten Bremsmonitors 100 gezeigt. Es handelt sich um eine schematische Blockdarstellung der wesentlichen Schaltungselemente. Eingangsseitig weist der Bremsmonitor 100 eine Verbindungsstufe 110 auf. Diese Verbindungsstufe 110 hat vier oder mehr Schnittstellenblöcke 111.1, 111.2, 112.1, 112.2. Der Schnittstellenblock 111.1 empfängt vom ersten Bremssignaleingang KB ein Bremslösesignal kb. Dieses Bremslösesignal kb wird vorzugsweise mittels einer Spannungsanpassungsschaltung, die Teil des Schnittstellenblocks 111.1 ist, umgewandelt in die Versorgungsspannung (z.B. 5 V) des Bremsmonitors 100. Der Schnittstellenblock 111.1 kann auch eine optionale Diodenschaltung umfassen, um Spannungsspitzen des Bremslösesignals kb heraus zu filtern. Der Schnittstellenblock 111.1 kann auch eine optionale Optokopplerschaltung umfassen, um für eine galvanische Trennung zwischen dem ersten Bremssignaleingang KB und der Ausgangsseite 113.1. des Schnittstellenblocks 111.1 zu sorgen.

Der Schnittstellenblock 111.2 ist vorzugsweise gleich aufgebaut wie der Schnittstellenblock 111.1 und er empfängt vom zweiten Bremssignaleingang KB1 ein zweites Bremslösesignal kb1.

Der Schnittstellenblock 112.1 empfängt vom ersten Fahrsignaleingang AF ein Fahrsignal af. Dieses Fahrsignal af wird vorzugsweise mittels einer Spannungsanpassungsschaltung, die Teil des Schnittstellenblocks 112.1 ist, umgewandelt in die Versorgungsspannung (z.B. 5 V) des Bremsmonitors 100. Der Schnittstellenblock 112.1 kann auch einen optionalen Gleichrichter umfassen, um ein Wechselspannungs-Fahrsignal af umzuwandeln in ein Gleichspannungssignal. Der Schnittstellenblock 112.1 kann auch eine optionale Optokopplerschaltung umfassen, um für eine galvanische Trennung zwischen dem ersten Fahrsignaleingang AF und der Ausgangsseite 114.1. des Schnittstellenblocks 112.1 zu sorgen.

Der Schnittstellenblock 112.2 ist vorzugsweise gleich aufgebaut wie der Schnittstellenblock 112.1 und er empfängt vom zweiten Fahrsignaleingang AF1 ein zweites Fahrsignal af1.

Die Ausgangsseiten 113.1, 113.2, 114.1, 114.2 der Schnittstellenblöcke 111.1, 111.2, 112.1, 112.2 sind vorzugsweise mit einem (Input/Output-) Bussystem 120 des Bremsmonitors 100 verbunden.

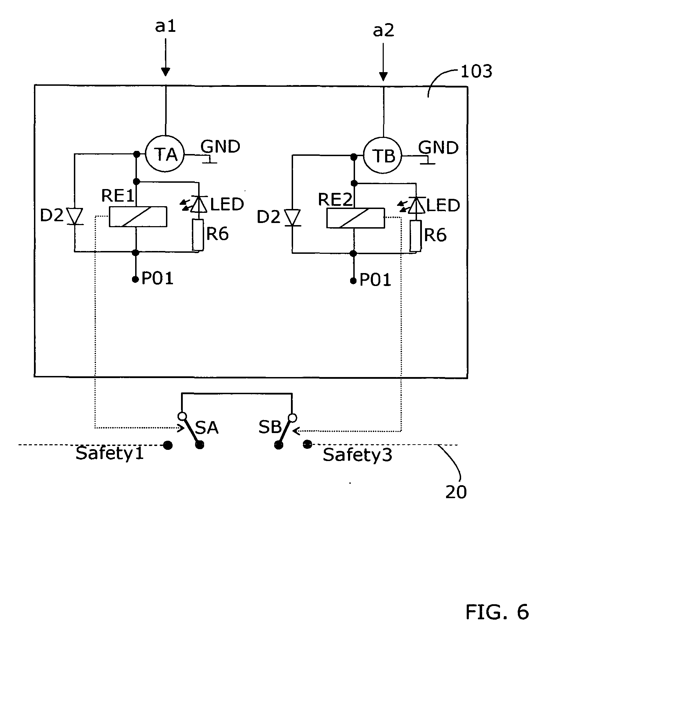

Weiterhin umfasst der Bremsmonitor 100 einen Relaiskreis 103, der so ausgelegt ist, dass durch den Mikroprozessor 102 der Relaiskreis (über ein Steuersignal a, das über das Bussystem 120 übertragbar ist) aktivierbar ist, um durch das Aktivieren des Relaiskreises 103 den Sicherheitskreis 20 der Aufzugsanlage 10, oder eine Steuerspannung der Antriebssteuerung 12, zu unterbrechen, um somit die Aufzugsanlage 10 sofort oder nach einer Verzögerung still zu setzen. Der Relaiskreis 103 umfasst zu diesem Zweck vorzugsweise zwei Relais RE1, RE2, die z.B. über ein gemeinsames Steuersignal a, oder über zwei getrennte Signale (a1 und a2 in Fig. 6) geschaltet werden können. Vorzugsweise sind die Relais RE1, RE2 ausgangsseitig so in den Sicherheitskreis 20 der Aufzugsanlage 10 integriert, oder mit einer Steuerspannungsleitung verbunden, dass der Sicherheitskreis 20 nur dann geschlossen (d.h. die Aufzugsanlage 10 in Funktion ist), wenn der Mikroprozessor 102 keinen Fehler detektiert (d.h. wenn kein Steuersignal a anliegt, oder keine Steuersignale a1 und a2 anliegen) und wenn alle anderen Komponenten des Bremsmonitors 100 fehlerfrei arbeiten. In Fig. 3 sind die Schalter der beiden Relais RE1 und RE2 geschlossen dargestellt. Dies ist der Normalzustand der Aufzugsanlage und die Aufzugskabine 14 kann bewegt werden. Beim Auftreten eines Fehlers in dem Bremsmonitor 100, oder wenn der Mikroprozessor 102 einen Fehler am Bremssystem 13 detektiert, dann öffnen beide Relais RE1, RE2 automatisch, und der Fahrbetrieb der Aufzugsanlage 10 ist unterbrochen.

Besonders bevorzugt ist eine Ausführungsform, bei der zwei Relais RE1, RE2 im Relaiskreis 103 zum Einsatz kommen, deren Schalter in Serie geschaltet sind. Damit werden die Redundanz und somit auch die Sicherheit erhöht. Besonders bevorzugt sind sogenannte Sicherheitsrelais. Der Relaiskreis 103 umfasst pro Relais vorzugsweise einen Schalttransistor, um das Steuersignal a (vorzugsweise ein Signal im Bereich der 5 V Versorgungsspannung), das über das Bussystem 120 übertragen wird, umzuwandeln in ein Schaltsignal (vorzugsweise ein Signal im Bereich der 24 V Versorgungsspannung) für die Relais RE1, RE2.

In Fig. 4 sind Details eines ersten möglichen Schnittstellenblocks 111.1 gezeigt, der z.B. in einem der erfindungsgemässen Bremsmonitore 100 eingesetzt werden kann. Es handelt sich um eine schematische Blockdarstellung der wesentlichen Schaltungselemente. Eingangsseitig ist eine optionale Leuchtdiode (LED) mit einem Reihenwiderstand R1 vorgesehen. Die Leuchtdiode (LED) leuchtet, wenn ein Bremslösesignal kb anliegt. Es ist eine Spannungsanpassungsschaltung aus mehreren Widerständen R2, R3 vorgesehen, welche die Versorgungsspannung (z.B. 24 V) an den Kontakten des zu überwachenden Bremssystems 13 (respektive eines Bremsarmes des Bremssystems 13) umwandelt in die Versorgungsspannung (z.B. 5 V) des Bremsmonitors 100. Die Spannungsanpassungsschaltung ist vorzugsweise so ausgelegt, dass z.B. durch das Umsetzen von Brücken oder das Umschalten von DIP-Schaltern (DIP steht für Dual in-line package) eine Spannungsanpassung erzielt werden kann, damit Aufzugspersonal vor Ort die notwendigen Anpassungen selbst vornehmen kann. DIP-Schalter sind kleine Schalter, die typischerweise in sogenannten DIL-Gehäusen (DIL steht hier für dual in-line) eingebaut sind.

Der Schnittstellenblock 111.1 kann auch eine optionale Diodenschaltung mit den Dioden D1 umfassen, wie in Fig. 4 gezeigt, um Spannungsspitzen des Bremslösesignals kb heraus zu filtern. Der Schnittstellenblock 111.2 kann gleich aufgebaut sein.

In Fig. 5 sind Details eines weiteren möglichen Schnittstellenblocks 112.1 gezeigt, der z.B. in einem der erfindungsgemässen Bremsmonitore 100 eingesetzt werden kann. Es handelt sich um eine schematische Blockdarstellung der wesentlichen Schaltungselemente. Eingangsseitig wird ein Wechselspannungssignal af angelegt. Das Wechselspannungssignal af wird durch einen Gleichrichter GR1 umgewandelt in ein Gleichspannungssignal. Auf der Gleichspannungsseite ist ein Widerstand R4, oder es sind mehrere Widerstände R4, R5 in Serie geschaltet, um das Gleichspannungssignal einem optionalen Optokoppler 115.1 zuzuführen. Auf der Ausgangsseite stellt der Optokoppler 115.1 ein Gleichspannungssignal (vorzugsweise im Bereich der 5 V Versorgungsspannung) bereit, das über die Verbindung 114.1 auf den Bus 120 geleitet wird. Der Schnittstellenblock 112.2 kann gleich aufgebaut sein.

In Fig. 6 sind Details eines weiteren möglichen Relaiskreises 103 gezeigt, der z.B. in einem der erfindungsgemässen Bremsmonitore 100 eingesetzt werden kann. Es handelt sich um eine schematische Blockdarstellung der wesentlichen Schaltungselemente. Der gezeigte Relaiskreis 103 weist zwei Relais RE1, RE2 (vorzugsweise Sicherheitsrelais) auf, deren Schalter in Serie geschaltet sind. Steuersignale a1 und a2, die vom Bus 120 an den Relaiskreis 103 übergeben werden, werden von den jeweiligen Transistoren (vorzugsweise kommen MOS-FET Transistoren zum Einsatz) TA, bzw. TB verstärkt, um die jeweiligen Relais RE1 oder RE2 zu schalten. Optionale Leuchtdioden (LED) zeigen, ob ein Schaltsignal am Relais anliegt. Das Relais RE1 betätigt einen vereinfacht dargestellten Schalter SA und das Relais RE2 schaltet einen vereinfacht dargestellten Schalter SB. In der gezeigten Schaltstellung besteht kein Kontakt zwischen den Anschlüssen Saftey1 und Saftey3. In diesem Ausnahmefall ist der Sicherheitskreis 20 geöffnet und die Aufzugsanlage 10 ruht. Falls keine Schaltpulse a1, a2 an den beiden Relais RE1 und RE2 anliegen, so schalten beiden Schalter SA und SB um und die Anschlüsse Saftey1 und Saftey3 werden elektrisch leitend miteinander verbunden. In diesem Fall ist der Sicherheitskreis 20 geschlossen (falls die anderen Schalter 21 des Sicherheitskreises 20 auch geschlossen sind) und die Aufzugsanlage 10 kann fahren.

Besonders bevorzugt ist ein Relaiskreis 103, dessen Relais RE1, RE2 Statussignale über den Bus 120 an den Mikroprozessor 102 zurück liefern (nicht gezeigt). Damit kann der Mikroprozessor 102 jeden Schaltvorgang kontrollieren, was die Sicherheit weiter erhöht.

Als Mikroprozessor 102 kommt vorzugsweise ein 8-bit Mikrocontroller zum Einsatz. Besonders geeignet ist z.B. ein ATMEGA88. Der Mikroprozessor 102 kann so beschaltet und/oder programmiert sein, dass er in der Lage ist sämtliche Prozesse und Vorgänge gemäss vorher festgelegten Regeln abzuarbeiten.

Mittels des Mikroprozessors 102 ist der Bremsmonitor 100 in der Lage den Status eines oder beider Bremskontakte (K1 oder K2) mit der Fahrinformation (af und/oder af1) in Bezug zu setzen.

Ein Bremsmonitor 100 kann eingesetzt werden, wenn ein existierender Antrieb 11, ein neu eingebauter Antrieb 11, eine existierende Aufzugssteuerung 12 oder eine neu eingebaute Aufzugssteuerung 12 nicht in der Lage ist/sind die (Halte-)Bremse(n) 13 zu überprüfen. Der Bremsmonitor 100 stoppt dann die Aufzugsanlage 10, wenn ein Bremsproblem detektiert wurde. Dabei sollen möglichst fehlerhafte Problemerkennungen (Fehlerkennungen) vermieden werden, die zum Beispiel durch das Prellen von Bremskontakten auftreten können, um ein unnötiges Abschalten zu vermeiden.

Der Bremsmonitor 100 ist in der Lage zu prüfen, ob eine Bremse des Bremssystems 13 öffnet. Der Bremsmonitor 100 kann hingegen nicht detektieren, ob die Bremse schliesst. Gemäss einer bevorzugten Ausführungsform kann der Bremsmonitor 100 jedoch aus einer Fehlerauswertung schliessen, ob es einen (elektrischen und/oder mechanischen) Kontaktfehler gegeben hat. Ob dieser Kontaktfehler jedoch von einer Bremse stammt, die nicht schliesst (im Sinne vom bremst), kann der Bremsmonitor 100 nicht ermitteln.

Der Bremsmonitor 100 wertet, wie beschrieben, mindestens einen Bremskontakt K1 aus, indem das entsprechende Bremssignal kb verarbeitet wird. Besonders bevorzugt ist eine Ausführungsform, bei der zwei Bremskontakte K1 und K2 ausgewertet werden, indem die entsprechenden Bremssignale kb und kb1 verarbeitet werden. Vorzugsweise ist der Bremsmonitor 100 anpassbar an Bremskontakte K1, K2, die normal offen oder normal geschlossen sind. D.h. einen bevorzugten Bremsmonitor 100 kann man anpassen an die Polung der Bremskontakte K1, K2 und/oder die Polung des Fahrsignals af oder der Fahrsignale af, af1.

Mindestens ein Fahrsignal af wird empfangen und ausgewertet, das anzeigt, ob der Antrieb 11 sich bewegt. Vorzugsweise wird hier ein zweites Fahrsignal af1 zusammen mit dem ersten Fahrsignal af empfangen und ausgewertet, wie in der folgenden Tabelle 1 dargestellt:

| Tabelle 1: | | |
|---|---|---|
| af | af1 | AF_info |
| 1 | 0 | 1 |
| 0 | 1 | 1 |
| 0 | 0 | 0 |
| 1▲ | 1▼ | 1* |

Das Informationssignal AF_info stellt die ODER-Verknüpfung der Fahrsignale af und af1 dar. Wenn eines der Fahrsignale af oder af1 eine logische 1 zeigt, dann befindet sich die Aufzugskabine 14 in Bewegung und das Informationssignal AF_info ist 1. Wenn keines der Fahrsignale af oder af1 1 ist, dann ist auch das Informationssignal AF_info 0. Wenn es sich bei den Fahrsignalen af und af1 um sogenannte Fahrrichtungssignale handelt und af z.B. die Aufwärtsfahrt und af1 die Abwärtsfahrt anzeigen (unterste Zeile in der obigen Tabelle), dann kann ein Sonderfall auftreten. Wenn beide Fahrrichtungssignale af oder af1 logisch Eins sind, dann ist ein Fehler aufgetreten, da offensichtlich die Aufzugskabine nicht in beide Richtungen gleichzeitig fahren kann. Dieser Fehler ist in der Tabelle mit 1* gekennzeichnet.

Die Fahrsignale oder Fahrtrichtungssignale af und af1 können Gleichspannungssignale oder Wechselspannungssignale sein, die vorzugsweise zwischen 24 V Gleichspannung und 230 V Wechselspannung liegen können. Der Bremsmonitor 100 ist vorteilhafterweise entsprechend ausgelegt.

Wenn das Auswerten/Vergleichen der Signale kb und af, oder kb, kb1 und af sowie af1 ergibt, dass ein Problem vorliegt, dann wird die Aufzugsanlage 10 gestoppt. Vorzugsweise ist die Auslegung so gewählt, dass die Aufzugsanlage 10 eine Fahrt beendet, bevor sie blockiert wird.

Um eine Fehlauslösung zu vermeiden, werden vorzugsweise Fehlerspeicher oder Fehlerzähler als Teil des Bremsmonitors 100 eingesetzt. Der Einsatz von Fehlerspeichern und/oder Fehlerzählern führt dazu, dass nicht jeder erkannte Fehler unmittelbar zu einem Stoppen der Aufzugsanlage 10 führt. Dabei nimmt man unter Umständen in Kauf, dass eine Wegstrecke mit angezogener (Halte-)Bremse gefahren wird. Eine solche Fahrt mit angezogener (Halte-)Bremse ist unproblematisch, da die Abnützung nicht sehr gross ist.

Die folgende Tabelle 2 zeigt die verschiedenen Signale und eine Auslegung der Fehlerspeicher und/oder Fehlerzähler einer bevorzugten Ausführungsform.

| Tabelle 2: | | | | | |
|---|---|---|---|---|---|
| kb | kb1 | AF_info (af ODER af1) | Bemerkung | Fehler | Aktion |
| 0 | 0 | 0 | Startbedingung | 0 | Bremskontakte K1 und K2 geschlossen |
| 0 | 0 | 1 | Vorübergehender Zustand beim Start/Stopp; Kontaktproblem oder Bremse öffnet nicht | B = 1 | Aktion 1: |
| 0 | 1 | 1 | Vorübergehender Zustand beim Start/Stopp; Kontaktproblem oder ein Bremsarm öffnet nicht | | |
| 1 | 0 | 1 | | | |
| 0 | 1 | 0 | Ungültiger Zustand; Kontaktproblem oder ein Bremsarm verlässt die Offenstellung nicht | A = 1 | Aktion 2: |
| 1 | 0 | 0 | | | |
| 1 | 1 | 0 | Ungültiger Zustand | | |
| 1 | 1 | 1 | Normalzustand bei fahrendem Aufzug | 0 | Keine Aktion |

Aktion 1: Falls der Fehler B für mehr als tA=3 s wahr ist (d.h. falls B = 1), dann zählt ein Zähler C1 drei Fehler für drei aufeinander folgende Fahrten und ein weiterer Zähler C3 wird eingesetzt, um mindestens fünf Fehler innerhalb von fünf Minuten (= 300 s) zu zählen. Falls der Fehler B für weniger als tA=3 s wahr ist, dann handelt es sich um eine typische Situation wo die Bremsen bewusst erst mit einer kleinen Verzögerung nach dem Anfahren der Aufzugskabine 14 gelöst wurden (vorübergehender Zustand beim Start/Stopp). Zusätzlich wird ein 60s-Laufzeitbegrenzer T1 gestartet, falls der Fehler B für mehr als tA=3 s wahr ist. Die Relais RE1/RE2 öffnen 2 s nachdem af von 1 auf 0 wechselt, falls der Zähler C1 > 2 ist oder falls der Zähler C3 nach 5 Min. > 4 ist. Die Relais RE1/RE2 öffnen sofort, falls der Laufzeitbegrenzer T1 nicht innerhalb von 60 s zurück gesetzt wurde (z.B. über einen Resetschalter). Durch den Laufzeitbegrenzer T1 ist eine Maximallaufzeit im Falle eines Fehlers festgelegt. Beim Überschreiten dieser Maximallaufzeit wird die Aufzugsanlage still gesetzt.

Aktion 2: Falls A für mehr als 2 s wahr ist (d.h. falls A = 1), dann wird ein Zähler C2 eingesetzt, um drei Fehler für drei aufeinander folgende Fahrten zu zählen. Die Relais RE1/RE2 öffnen sofort, falls der Zähler C2 > 2 ist.

Als Laufzeitbegrenzer werden vorzugsweise Zeitgeber (Timer) oder Taktgeber eingesetzt.

Die entsprechenden Abläufe werden vorteilhafterweise mittels des Mikroprozessors 102 kontrolliert. Ein entsprechender Befehls-/Regelsatz legt die einzelnen Schritte fest und die Parameter (wie zum Beispiel die Anzahl der erlaubten Fehler, die Länge des Zeitfensters tA (z.B. 3 s), die Maximalzeit (z.B. 60 s), die der Laufzeitbegrenzer T1 verwendet, etc.) werden vorgegeben. Damit kann der Mikroprozessor 102 den Befehls-/Regelsatz abarbeiten und je nach Situation in der gewünschten Form reagieren.

Bei der Aktion 1 z.B. prüft der Mikroprozessor 102, ob der Fehler B für mehr als tA=3 s wahr ist. Wenn das der Fall ist, dann zählt ein Zähler C1, der im Mikroprozessor 102 realisiert ist, drei Fehler für drei aufeinander folgende Fahrten. Der Mikroprozessor 102 setzt einen weiteren Zähler C3 zusammen mit einem Laufzeitbegrenzer T3 ein, um mindestens fünf Fehler innerhalb von fünf Minuten zu zählen. Analog können auch die anderen Regeln abgearbeitet werden.

In einer alternativen Ausführungsform werden dem Mikroprozessor 102 separate Fehlerspeicher und/oder Fehlerzähler (als Hardware) zugeordnet, um die anfallenden Aufgaben zu übernehmen.

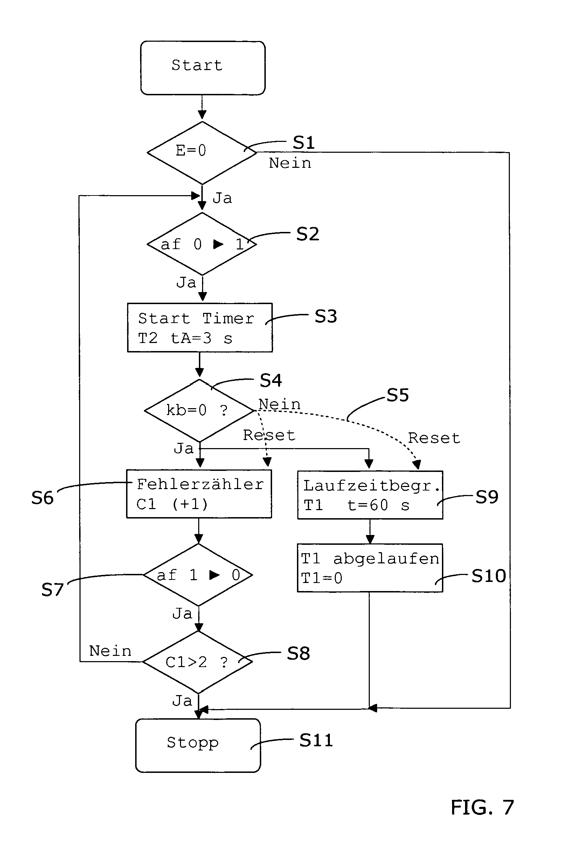

Das erfindungsgemässe Verfahren zum Überwachen eines Bremssystems 13 zeichnet sich durch die folgenden Schritte aus, die in einem schematischen Flussdiagramm in Fig. 7 gezeigt sind. Beim Überwachen des Bremssystems 13 werden ein erstes Bremslösesignal kb des Bremssystems 13 und ein erstes Fahrsignals af der Antriebssteuerung 12 empfangen (Schritte S2 und S4). Es wird dann überwacht, ob nach dem Anlegen des ersten Fahrsignals af (d.h. das Fahrsignal af geht von 0 auf 1; Schritt S2) ein erstes Bremslösesignal kb folgt (Schritt S4). Ein solches Bremslösesignal kb tritt auf, wenn eine Bremse des Bremssystems 13 gelöst wurde. Falls nun dieses Bremslösesignal kb nicht innerhalb eines Zeitfensters tA auftritt (Schritt S3), dann wird der Relaiskreis 103 aktiviert (Schritt S11), um den Sicherheitskreis 20 der Aufzugsanlage 10 oder eine Steuerspannung der Antriebssteuerung 12 zu unterbrechen. Dadurch wird die Aufzugsanlage 10 still gesetzt.

Das in Fig. 7 gezeigte Flussdiagramm stellt eine einfache Implementierung der Erfindung dar. Nachdem der Bremsmonitor 100 gestartet oder angeschaltet wurde, wird abgefragt, ob ein Dauerfehlerspeicher E einen Fehler abgespeichert hat (Schritt S1). Falls E = 0, dann liegt kein dauerhafter Fehler vor. Ansonsten kann die Aufzugsanlage gestoppt werden (Schritt S11). Falls kein dauerhafter Fehler vorliegt, wird geprüft, ob das Fahrsignal af von 0 auf 1 geht (Schritt S2). Falls ja, dann wird der Zeitgeber T2 gestartet (Schritt S3), der ein Zeitfenster von beispielsweise tA = 3 s vorgibt. Wenn innerhalb dieser 3 s kein Bremslösesignal kb folgt (Schritt S4), d.h. wenn kb = 0 bleibt, dann liegt ein erster Fehler vor, der in dem Fehlerzähler C1 abgespeichert wird. Dieser Fehlerzähler C1 startet mit einer Null und wird in Einerschritten (+1) erhöht. Falls nun das Fahrsignal af von 1 auf 0 geht (d.h. falls die Aufzugskabine anhält; Schritt S7), wird geprüft, ob mehr als zwei Fehler im Fehlerzähler C1 gespeichert worden sind (Schritt S8). Falls wirklich mehr als 2 Fehler aufgetreten sind, wird die Aufzugsanlage 10 still gesetzt (Schritt S11). Falls jedoch weniger als zwei Fehler aufgetreten sind, verzweigt das Verfahren zurück zu einem Punkt vor dem Schritt S2.

Parallel zu dem Zählen der Fehler mittels des Fehlerzählers C1, wird ein Laufzeitbegrenzer T1 eingesetzt, der die Zeit von Null bis z.B. 60 s zählt. Falls der Laufzeitbegrenzer T1 abgelaufen ist, d.h. falls 60 s überschritten wurden (Schritt S10) und die Bremse immer noch nicht gelöst ist, was man am Bremslösesignal kb = 0 erkennen kann, dann wird die Aufzugsanlage 10 still gesetzt (Schritt S11).

Falls das Bremslösesignal kb = 1 ist, dann bedeutet dies, dass die Bremse gelöst wurde. In diesem Fall werden die Fehlerzähler C1 und der Laufzeitbegrenzer T1 auf Null zurückgesetzt, was durch die mit S5 bezeichneten, gestrichelten Pfeile und die Bezeichnung "Reset" angedeutet ist.

Beim Stillsetzen der Aufzugsanlage kann z.B. ein dauerhafter Fehler in dem Dauerfehlerspeicher E gespeichert werden, um zu verhindern, dass die Aufzugsanlage durch einfaches An- und Abschalten wieder zum Laufen gebracht wird. Falls E = 1 ist, d.h. falls ein dauerhafter Fehler vorliegt, verzweigt das Verfahren nach Fig. 7 sofort vom Schritt S1 zum Ende (Schritt S11).

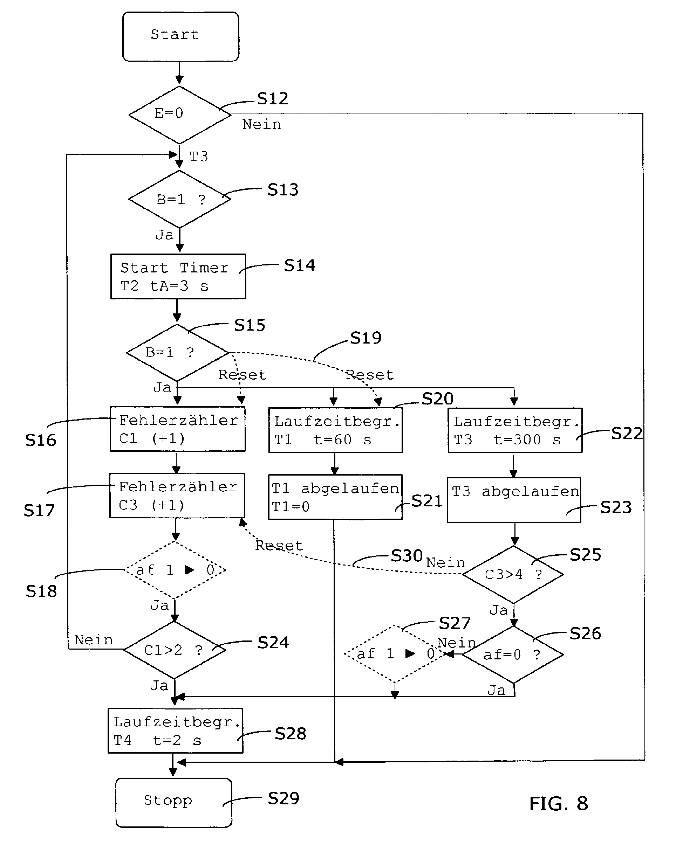

Das in Fig. 8 gezeigte Flussdiagramm stellt eine bevorzugte Implementierung der Erfindung dar. Nachdem der Bremsmonitor 100 gestartet oder angeschaltet wurde, wird abgefragt, ob ein Dauerfehlerspeicher E einen Fehler abgespeichert hat (Schritt S12). Falls E = 0, dann liegt kein dauerhafter Fehler vor. Ansonsten kann die Aufzugsanlage gestoppt werden (Schritt S29). Falls kein dauerhafter Fehler vorliegt, wird geprüft, ob B = 1 ist (Schritt S13). Das Signal B ergibt sich aus der Tabelle 2. Falls ja, dann wird der Zeitgeber T2 gestartet (Schritt S14), der ein Zeitfenster von beispielsweise tA = 3 s vorgibt. Wenn innerhalb dieser 3 s das Signal B = 1 bleibt (Schritt S15), dann liegt ein erster Fehler vor, der in dem Fehlerzähler C1 abgespeichert wird. Dieser Fehlerzähler C1 startet mit einer Null und wird in Einerschritten (+1) erhöht. Falls nun das Fahrsignal af von 1 auf 0 geht (d.h. falls die Aufzugskabine anhält; Schritt S18), wird geprüft, ob mehr als zwei Fehler im Fehlerzähler C1 gespeichert worden sind (Schritt S24). Falls wirklich mehr als zwei Fehler aufgetreten sind, wird die Aufzugsanlage 10 still gesetzt (Schritt S29). Falls jedoch weniger als zwei Fehler aufgetreten sind, verzweigt das Verfahren zurück zu einem Punkt vor dem Schritt S13. Anstatt im Schritt S18 das Fahrsignal af zu prüfen, kann man hier zum Beispiel alternativ auch das Informationssignal AF_info prüfen.

Parallel zu dem Zählen der Fehler mittels des Fehlerzählers C1, wird analog zu Fig. 7 ein Laufzeitbegrenzer T1 eingesetzt, der die Zeit von Null bis z.B. 60 s zählt. Falls der Laufzeitbegrenzer T1 abgelaufen ist, d.h. falls 60 s überschritten wurden (Schritt S21) und die Bremse immer noch nicht gelöst ist, was man am Bremslösesignal kb = 0 (oder am Fehlersignal B = 1) erkennen kann, dann wird die Aufzugsanlage 10 still gesetzt (Schritt S29).

Falls das Bremslösesignal kb = 1 ist, dann bedeutet dies, dass die Bremse gelöst hat. In diesem Fall werden die Fehlerzähler C1 und der Laufzeitbegrenzer T1 auf Null zurückgesetzt, was durch die mit S19 bezeichneten, gestrichelten Pfeile und die Bezeichnung "Reset" angedeutet ist.

Parallel zu dem Zählen der Fehler mittels des Fehlerzählers C1, kann ein weiterer Laufzeitbegrenzer T3 eingesetzt werden, der die Zeit von Null bis z.B. 300 s (= 5 Minuten) zählt. Weiterhin kommt ein Fehlerzähler C3 zum Einsatz, der mit einer Null startet und in Einerschritten (+1) erhöht wird. Wenn nun nach 300 s (Schritt S23) mehr als vier Fehler im Fehlerzähler C3 vorliegen (Schritt S25), dann wird geprüft, ob das Fahrsignal af = 0 ist (Schritt S26). In diesem Fall wird die Aufzugsanlage 10 still gesetzt (Schritt S29), wobei vor dem Stillsetzen ein weiterer Laufzeitbegrenzer T4, mit t = 2 s, zum Einsatz kommt (Schritt S28). Bei den 2 s handelt es sich um die Wartezeit, die notwendig ist, um die Türen zu öffnen, bevor dann die Aufzugsanlage 10 still gesetzt wird. Falls das Fahrsignal af = 1 ist, so wird abgewartet bis das Fahrsignal af von 1 auf 0 wechselt (Schritt S28), bevor dann der Laufzeitbegrenzer T4 zum Einsatz kommt. Falls im Schritt S25 C3 nicht grösser als 4 ist, so wird der Fehlerzähler C3 auf Null zurückgesetzt (Schritt S30).

Zusätzlich kann optional das Fehlersignal A (siehe Tabelle 2) ausgewertet und verarbeitet werden. Mit einem weiteren Laufzeitbegrenzer T5 (nicht gezeigt), kann, falls A = 1, eine kurze Wartezeit von zum Beispiel 2 s eingeführt werden. Falls A nach den 2 s immer noch 1 ist, dann kann ein weiterer Fehlerzähler C2 um eine 1 erhöht werden. Wenn der Inhalt des Zählers C2 grösser als 2 ist, dann kann die Aufzugsanlage 10 still gesetzt werden (Schritt S29).

Das Bremssystem 13 kann zwei Bremsarme aufweisen, die unabhängig von einander öffnen (d.h. eine Bremsbacke der Bremse lösen) und schliessen. Bei Bremssystemen 13 mit unabhängigen Bremsarmen sind pro Bremsarm ein Bremsmagnet, eine Feder und ein Überwachungsschalter vorhanden. Andere Bremssysteme 13 weisen zwei Bremsarme auf, die aber voneinander abhängig sind. In diesem Fall kommen ein Bremsmagnet, eine Feder und ein Überwachungsschalter zum Einsatz.

Jedem Bremsarm ist vorzugsweise ein Bremskontakt K1 oder K2 zugeordnet. Vorzugsweise sind ein erster elektrischer Bremskontakt K1 des Bremssystems 13 mit dem ersten Bremskontaktschalter des Bremssystems 13 und ein zweiter elektrischer Bremskontakt K2 des Bremssystems 13 mit dem zweiten Bremskontaktschalter des Bremssystems 13 elektrisch verbunden. Jeder der Bremskontaktschalter gibt ein Bremslösesignal (kb oder kb1) ab, wenn der erste, respektive der zweite Bremsarm des Bremssystems 13 öffnet oder sich löst.

Gemäss Erfindung geht es, wie bereits erwähnt, unter anderem um das Nachrüsten oder Modernisieren einer existierenden Aufzugsanlage 10, die einen Antrieb 11, eine dem Antrieb 11 zugewiesene Antriebssteuerung 12 und ein Bremssystem 13 aufweist. Das Nachrüsten oder Modernisieren erfolgt typischerweise wie folgt. In einem Verfahrensschritt wird ein separater Bremsmonitor 100, nach einer oder mehreren der vorhergehend beschriebenen Ausführungsformen, in die existierenden Aufzugsanlage 10 eingebaut. Nach oder während des Einbauens wird der erste Bremssignaleingang KB des Bremsmonitors 100 mit einem ersten elektrischen Bremskontakt K1 des Bremssystems 13 verbunden. Analog wird der Fahrsignaleingang AF des Bremsmonitors 100 über eine Leitung 12.1 mit einem ersten elektrischen Fahrsignalkontakt der Antriebssteuerung 12 verbunden. Ausserdem wird die Spannungsversorgung 101 angeschlossen, um den Bremsmonitor 100 mit mindestens einer Betriebsspannung VCC zu versehen. Der Relaiskreis 103 des Bremsmonitors 100 wird in einen Sicherheitskreis 20 der Aufzugsanlage integriert oder mit einer Steuerspannung der Antriebssteuerung 12 verbunden.

Vorzugsweise weist der Bremsmonitor 100 ein Resetschalter auf, der nach dem Einbauen des separaten Bremsmonitors 100 oder nach dem Beheben einer Störung der Aufzugsanlage 10 betätigt wird. Durch das Betätigen des Resetschalters wird der Bremsmonitor 100 in einen definierten Ausgangszustand überführt. Dabei werden zum Beispiel die Fehlerspeicher oder -zähler C1, C2, C3 zurück gesetzt (initialisiert).

Bei dem Einbauen kann der Bremsmonitor 100 auch konfiguriert werden, indem Einstellungen (z.B. Vorgeben von Parametern, Einstellen von Schaltern, Umsetzen von Brücken oder DIP-Schaltern, etc.) vorgenommen werden. Der Bremsmonitor 100 kann auch so ausgelegt sein, dass er in der Lage ist ein Impulssignal (beispielsweise das Impulssignal eines Impulstachos zur Überwachung der Motordrehzahl) zu verarbeiten. In diesem Fall kann der Bremsmonitor 100 z.B. mit einer entsprechenden eingangsseitigen Anpassungsschaltung ausgestattet sein.

Der Bremsmonitor 100 lässt sich sowohl bei Seilantrieben 11 als auch bei Riemenantrieben 11 einsetzen.

## Patentansprüche

1. Verfahren zum Überwachen eines Bremssystems (13) einer Aufzugsanlage (10), die zusätzlich zu dem Bremssystem (13) einen Antrieb (11) und eine Antriebssteuerung (12) aufweist, wobei die folgenden Schritte ausgeführt werden:
- Empfangen eines ersten Bremslösesignals (kb) des Bremssystems (13),
- Empfangen eines ersten Fahrsignals (af) der Aufzugsanlage (10),
- Überwachen, ob nach dem Anlegen des ersten Fahrsignals (af) das erste Bremslösesignal (kb) anliegt, wobei dieses Bremslösesignal (kb) auftritt, wenn eine Bremse des Bremssystems (13) gelöst wurde,
- falls dieses Bremslösesignal (kb) nicht innerhalb eines Zeitfensters (tA) empfangen wird, dann
■ Aktivieren eines Relaiskreises (103) zum Unterbrechen eines Sicherheitskreises (20) der Aufzugsanlage (10) oder einer Steuerspannung der Antriebssteuerung (12), um die Aufzugsanlage (10) stillzusetzen.

2. Verfahren nach Anspruch 1, **dadurch gekennzeichnet, dass** ein zweites Bremslösesignal (kb1) des Bremssystems (13) empfangen wird.

3. Verfahren nach Anspruch 2, **dadurch gekennzeichnet, dass** beim Schritt des Überwachens geprüft wird, ob das erste Bremslösesignal (kb) und/oder das zweite Bremslösesignal (kb1) empfangen wurde.

4. Verfahren nach einem der vorhergehenden Ansprüche, **dadurch gekennzeichnet, dass** das Zeitfenster (tA) vorgegeben ist und dass mindestens ein Bremslösesignal (kb, kb1) innerhalb des Zeitfensters (tA) nach dem Empfang des Fahrsignals (af) empfangen wird, wobei das Aktivieren des Relaiskreises (103) erfolgt, wenn kein Bremslösesignal (kb, kb1) innerhalb des Zeitfensters (tA) empfangen wird.

5. Verfahren nach einem der vorhergehenden Ansprüche, **dadurch gekennzeichnet, dass** das Fahrsignal (af) entweder ein Fahrtrichtungssignal (af) ist, das von der Antriebssteuerung (12) bereitgestellt wird, oder dass das Fahrsignal (af) ein Bremslösebefehl ist, der von der Antriebssteuerung (12) bereitgestellt wird.

6. Verfahren nach einem der vorhergehenden Ansprüche, **dadurch gekennzeichnet, dass** ein erster elektrischer Bremskontakt (K1) des Bremssystems (13) mit einem ersten Bremskontaktschalter des Bremssystems (13) und ein zweiter elektrischer Bremskontakt (K2) des Bremssystems (13) mit einem zweiten Bremskontaktschalter des Bremssystems (13) elektrisch verbunden sind, wobei jeder der Bremskontaktschalter ein Bremslösesignal (kb, kb1) abgibt, wenn ein erster respektive zweiter Bremsarm des Bremssystems (13) öffnet oder sich löst.

7. Verfahren nach einem der vorhergehenden Ansprüche, **dadurch gekennzeichnet, dass** das erste Fahrsignal (af) mit einem zweiten Fahrsignal (af1) miteinander ODER-verknüpft wird, um ein Informationssignal (AF_info) bereitzustellen, sobald mindestens eines der Fahrsignale (af, af1) eine logische Eins zeigt.

8. Verfahren nach einem der vorhergehenden Ansprüche, **dadurch gekennzeichnet, dass** ein Fehlerspeicher oder Fehlerzähler (C1, C2, C3) eingesetzt wird, um feststellen zu können, ob ein Fehler mehrfach auftritt, wobei das Aktivieren des Relaiskreises (103) erst erfolgt, wenn der Fehler mehrfach auftritt.

9. Verfahren nach einem der vorhergehenden Ansprüche, **dadurch gekennzeichnet, dass** ein Laufzeitbegrenzer (T1) gestartet wird, falls das Bremslösesignal (kb) für mehr als tA=3 s wahr ist, wobei durch den Laufzeitbegrenzer (T1) eine Maximallaufzeit im Falle eines Fehlers festgelegt ist.

10. Bremsmonitor (100) zum Überwachen eines Bremssystems (13) einer Aufzugsanlage (10), die zusätzlich zu dem Bremssystem (13) einen Antrieb (11) und eine Antriebssteuerung (12) aufweist, **dadurch gekennzeichnet, dass** der Bremsmonitor (100) umfasst:
- einen ersten Bremssignaleingang (KB), um den Bremsmonitor (100) mit einem ersten Bremskontakt (K1) des Bremssystems (13) elektrisch zu verbinden,
- einen Fahrsignaleingang (AF), um den Bremsmonitor (100) mit einer Fahrsignalleitung (12.1) der Aufzugsanlage (10) zu verbinden,
- eine Spannungsversorgung (101), um den Bremsmonitor (100) mit mindestens einer Betriebsspannung (VCC) zu versehen,
- einen Mikroprozessor (102),
- einen Relaiskreis (103), der so beschaltet ist, dass durch den Mikroprozessor (102) der Relaiskreis (103) aktivierbar ist, um durch das Aktivieren des Relaiskreises (103) einen Sicherheitskreis (20) der Aufzugsanlage (10) oder eine Steuerspannung der Antriebssteuerung (12) zu unterbrechen, um somit die Aufzugsanlage (10) stillzusetzen
- und einen Timer (T2), der mit dem Fahrsignaleingang (AF) und dem ersten Bremssignaleingang (KB) so verbunden ist, dass nach Anliegen eines Fahrsignals (af) ein Zeitfenster (tA) startet und falls innerhalb des Zeitfensters (tA) kein Bremslösesignal (kb) anliegt, der Mikroprozessor (102) und dadurch der Relaiskreis (103) aktivierbar ist.

11. Bremsmonitor (100) nach Anspruch 10, **dadurch gekennzeichnet, dass** der Bremsmonitor (100) einen zweiten Bremssignaleingang (KB1) aufweist, um den Bremsmonitor (100) mit einem zweiten elektrischen Bremskontakt (K2) des Bremssystems (13) zu verbinden.

12. Bremsmonitor (100) nach Anspruch 10 oder 11, **dadurch gekennzeichnet, dass** der Bremsmonitor (100) durch den Mikroprozessor (102) gesteuert prüft, ob nach dem Anlegen eines ersten Fahrsignals (af) an dem Fahrsignaleingang (AF) mindestens an einem der Bremssignaleingänge (KB, KB1) ein Bremslösesignal (kb, kb1) anliegt, wobei dieses Bremslösesignal (kb, kb1) auftritt, wenn das Bremssystem (13), respektive eine Bremse des Bremssystems (13) gelöst wurde.

13. Bremsmonitor (100) nach Anspruch 12, **dadurch gekennzeichnet, dass** der Bremsmonitor (100) ein Bremslösesignal (kb, kb1) innerhalb eines vorgegebenen Zeitfensters (tA) nach dem Eingang eines Fahrsignals (af) an dem ersten Fahrsignaleingang (AF) erwartet, wobei das Aktivieren des Relaiskreises (103) erfolgt, wenn entweder kein Bremslösesignal (kb, kb1) anliegt, oder wenn kein Bremslösesignal (kb, kb1) innerhalb des Zeitfensters (tA) anliegt.

14. Bremsmonitor (100) nach einem der vorhergehenden Ansprüche 10 bis 13, **dadurch gekennzeichnet, dass** der Fahrsignaleingang (AF) des Bremsmonitors (100) mit der ersten elektrischen Fahrsignalleitung (12.1) und ein zweiter Fahrsignaleingang (AF1) mit einer zweiten elektrischen Fahrsignalleitung (12.2) der Antriebssteuerung (12) verbunden ist, wobei der Bremsmonitor (100) ein erstes Fahrtrichtungssignal (af) der ersten elektrischen Fahrsignalleitung (12.1) mit einem zweiten Fahrtrichtungssignal (af1) der zweiten elektrischen Fahrsignalleitung (12.2) miteinander ODER-verknüpft, um ein Informationssignal (AF_info) bereitzustellen, sobald mindestens eine der Fahrsignalleitungen (12.1, 12.2) eine logische Eins als Fahrsignal (af, af1) zeigt.

15. Verfahren zum Nachrüsten oder Modernisieren einer existierenden Aufzugsanlage (10), mit den folgenden Schritten:
- Einbauen eines separaten Bremsmonitors (100) nach einem oder mehreren der vorhergehenden Ansprüche 12 bis 14 in die existierende Aufzugsanlage (10),
- Verbinden des ersten Bremssignaleingangs (KB) des Bremsmonitors (100) mit einem ersten elektrischen Bremskontakt (K1) des Bremssystems (13),
- Verbinden des Fahrsignaleingangs (AF) des Bremsmonitors (100) mit einer ersten elektrischen Fahrsignalleitung (12.1) der Antriebssteuerung (12),
- Verbinden der Spannungsversorgung (101), um den Bremsmonitor (100) mit mindestens einer Betriebsspannung (VCC) zu versehen,
- Verbinden des Relaiskreises (103) des Bremsmonitors (100) mit einem Sicherheitskreis (20) der Aufzugsanlage oder mit einer Steuerspannung der Antriebssteuerung (12).

## Claims

1. Method for monitoring a brake system (13) of an elevator system (10) that, in addition to the brake system (13), has a drive (11) and a drive control (12), wherein the following steps are executed:
- Receive a first brake-release signal (kb) of the brake system (13);
- Receive a first travel signal (af) of the elevator system (10);
- Monitor whether, after occurrence of the first travel signal (af), a first brake-release signal (kb) occurs, this brake-release signal (kb) occurring when a brake of the brake system (13) has been released;
- If this brake-release signal (kb) is not received within a time-window (tA), then
■ Activate a relay circuit (103) to interrupt a safety circuit (20) of the elevator system (10), or a control voltage of the drive control (12), to bring the elevator system (10) to a standstill.

2. Method according to Claim 1, **characterized in that** a second brake-release signal (kb1) of the brake system (13) is received.

3. Method according to Claim 2, **characterized in that**, in the step of monitoring, a check is made as to whether the first brake-release signal (kb) and/or the second brake-release signal (kb1) have been received.

4. Method according to one of the foregoing claims, **characterized in that** the time-window (tA) is predefined, and that, within the time-window (tA), after receipt of the travel signal (af), at least one brake-release signal (kb, kb1) is received, activation of the relay circuit (103) occurring if no brake-release signal (kb, kb1) is received within the time-window (tA).

5. Method according to one of the foregoing claims, **characterized in that** the travel signal (af) is either a travel-direction signal (af) that is issued by the drive control (12), or the travel signal (af) is a brake-release command that is issued by the drive control (12).

6. Method according to one of the foregoing claims, **characterized in that** a first electric brake contact (K1) of the brake system (13) is electrically connected to a first brake-contact switch of the brake system (13), and a second electric brake contact (K2) of the brake system (13) is electrically connected to a second brake-contact switch of the brake system (13), each of the brake-contact switches issuing a brake-release signal (kb, kb1) when a first or second brake arm respectively of the brake system (13) opens or releases.

7. Method according to one of the foregoing claims, **characterized in that** the first travel signal (af) is OR-related to a second travel signal (af1) so as to issue an information signal (AF_info) as soon as at least one of the travel signals (af, af1) indicates logical 1.

8. Method according to one of the foregoing claims, **characterized in that** a fault memory or fault counter (C1, C2, C3) is employed to determine whether a fault occurs multiple times, activation of the relay circuit (103) only being effected if the fault occurs multiple times.

9. Method according to one of the foregoing claims, **characterized in that** a duration limiter (T1) is started if the brake-release signal (kb) is true for longer than tA=3 s, in the case of a fault, a maximum duration being set by the duration limiter (T2).

10. Brake monitor (100) for monitoring a brake system (13) of an elevator system (10) that, in addition to the brake system (13), has a drive (11) and a drive control (12), **characterized in that** the brake monitor (100) contains:
- a first brake-signal input (KB), to electrically connect the brake monitor (100) to a first brake contact (K1) of the brake system (13);
- a travel-signal input (AF), to connect the brake monitor (100) to a travel-signal conductor (12.1) of the elevator system (10);
- a voltage source (101), to provide the brake monitor (100) with at least one operating voltage (VCC);
- a microprocessor (102);
- a relay circuit (103), which is so connected that, through the microprocessor (102), the relay circuit can be activated so as to interrupt a safety circuit (20) of the elevator system (10), or a control voltage of the drive control (12), and thereby shut down the elevator system (10);
- and a timer (T2), which is connected with the travel-signal input (AF) and the first brake-signal input (KB) in such manner that, after occurrence of a travel signal (af), a time-window (tA) starts, and if, within the time-window (tA), no brake-release signal (kb) occurs, the microprocessor (102), and thereby the relay circuit (103), can be activated.

11. Brake monitor (100) according to Claim 10, **characterized in that** the brake monitor (100) has a second brake-signal input (KB1) to connect the brake monitor (100) to a second electric brake contact (K2) of the brake system (13).

12. Brake monitor (100) according to Claim 10 or 11, **characterized in that**, controlled by the microprocessor (102), the brake monitor (100) checks whether, after occurrence of a first travel signal (af) on the travel-signal input (AF), at least on one of the brake-signal inputs (KB, KB1) a brake-release signal (kb, kb1) occurs, this brake-release signal (kb, kb1) occurring when the brake system (13), or a brake of the brake system (13) respectively, has been released.

13. Brake monitor (100) according to Claim 12, **characterized in that** the brake monitor (100) expects a brake-release signal (kb, kb1) within a predefined time-window (tA) after the arrival of a travel signal (af) on the first travel-signal input (AF), wherein activation of the relay circuit (103) occurs when either no brake-release signal (kb, kb1) occurs, or when no brake-release signal (kb, kb1) occurs within the time-window (tA).

14. Brake monitor (100) according to one of the foregoing claims 10 to 13, **characterized in that** the travel-signal input (AF) of the brake monitor (100) is connected to the first electric travel-signal conductor (12.1). and a second travel-signal input (AF1) is connected to a second electric travel-signal conductor (12.2) of the drive control (12), the brake monitor (100) OR-relating a first travel-direction signal (af) of the first electric travel-signal conductor (12.1) to a second travel-direction signal (af1) of the second electric travel-signal conductor (12.2), for the purpose of issuing an information signal (AF_info) as soon as at least one of the travel-signal conductors (12.1, 12.2) displays logical 1 as travel signal (af, af1).

15. Method for retrofitting or modernizing an existing elevator system (10), with the following steps:
- Building into the existing elevator system (10) a separate brake monitor (100) according to one or more of the foregoing claims 12 to 14;
- Connecting the first brake-signal input (KB) of the brake monitor (100) to a first electric brake contact (K1) of the brake system (13);
- Connecting the travel-signal input (AF) of the brake monitor (100) to a first electric travel-signal conductor (12.1) of the drive control (12);
- Connecting the voltage source (101) so as to provide the brake monitor (100) with at least one operating voltage (VCC);
- Connecting the relay circuit (103) of the brake monitor (100) to a safety circuit (20) of the elevator system or to a control voltage of the drive control (12).

## Revendications

1. Procédé pour surveiller un système de frein (13) d'une installation d'ascenseur (10) qui comporte, en plus du système de frein (13), un entraînement (11) et une commande d'entraînement (12), étant précisé que les étapes suivantes sont exécutées :
- réception d'un premier signal de desserrage de frein (kb) du système de frein (13),
- réception d'un premier signal de marche (af) de l'installation d'ascenseur (10),
- surveillance pour voir si après l'application du premier signal de marche (af) le premier signal de desserrage de frein (kb) est appliqué, étant précisé que ce signal de desserrage de frein (kb) survient si un frein du système de frein (13) a été desserré,
- au cas où ce signal de desserrage de frein (kb) n'est pas reçu à l'intérieur d'une fenêtre de temps (tA),
• activation d'un circuit relais (103) pour couper un circuit de sécurité (20) de l'installation d'ascenseur (10) ou une tension de commande de la commande d'entraînement (12), pour arrêter l'installation d'ascenseur (10).

2. Procédé selon la revendication 1, **caractérisé en ce qu'**un second signal de desserrage de frein (kb1) du système de frein (13) est reçu.

3. Procédé selon la revendication 2, **caractérisé en ce que** l'étape de surveillance vérifie que le premier signal de desserrage de frein (kb) et/ou le second signal de desserrage de frein (kb1) ont été reçus ou non.

4. Procédé selon l'une des revendications précédentes, **caractérisé en ce que** la fenêtre de temps (tA) est prédéfinie et **en ce qu'**au moins un signal de desserrage de frein (kb, kb1) est reçu à l'intérieur de la fenêtre de temps (tA) après la réception du signal de marche (af), étant précisé que l'activation du circuit relais (103) a lieu si aucun signal de desserrage de frein (kb, kb1) n'est reçu à l'intérieur de la fenêtre de temps (tA).

5. Procédé selon l'une des revendications précédentes, **caractérisé en ce que** le signal de marche (af) est un signal de sens de marche (af) qui est fourni par la commande d'entraînement (12), ou **en ce que** le signal de marche (af) est un ordre de desserrage de frein qui est fourni par la commande d'entraînement (12).

6. Procédé selon l'une des revendications précédentes, **caractérisé en ce qu'**un premier contact électrique de frein (K1) du système de frein (13) est relié électriquement à un premier commutateur de contact de frein du système de frein (13) et un second contact électrique de frein (K2) du système de frein (13) est relié électriquement à un second commutateur de contact de frein du système de frein (13), étant précisé que chacun des commutateurs de contact de frein émet un signal de desserrage de frein (kb, kb1) si un premier ou un second levier de frein du système de frein (13) s'ouvre ou se desserre respectivement.

7. Procédé selon l'une des revendications précédentes, **caractérisé en ce que** le premier signal de marche (af) est relié par une opération OU au second signal de marche (af1) afin de fournir un signal d'information (AF_info) dès que l'un au moins des signaux de marche (af, af1) indique un 1 logique.

8. Procédé selon l'une des revendications précédentes, **caractérisé en ce qu'**une mémoire d'erreurs ou un compteurs d'erreurs (C1, C2, C3) est utilisé pour pouvoir constater si une erreur survient plusieurs fois, étant précisé que l'activation du circuit relais (103) n'a lieu que lorsque l'erreur survient plusieurs fois.

9. Procédé selon l'une des revendications précédentes, **caractérisé en ce qu'**un limiteur de durée (T1) est démarré au cas où le signal de desserrage de frein (kb) est vrai pour plus de tA=3 s, étant précisé qu'une durée maximale est fixée par le limiteur de durée (T1) en cas d'erreur.

10. Moniteur de frein (100) pour surveiller un système de frein (13) d'une installation d'ascenseur (10) qui comporte, en plus du système de frein (13), un entraînement (11) et une commande d'entraînement (12), **caractérisé en ce que** le moniteur de frein (100) comprend :
- une première entrée de signal de frein (KB) pour relier électriquement le moniteur de frein (100) à un premier contact de frein (K1) du système de frein (13),
- une entrée de signal de marche (AF) pour relier le moniteur de frein (100) à une ligne de signal de marche (12.1) de l'installation d'ascenseur (10),
- une alimentation en courant (101) pour doter le moniteur de frein (100) d'au moins une tension de fonctionnement (VCC),
- un microprocesseur (102),
- un circuit relais (103) qui est monté de manière à pouvoir être activé par le microprocesseur (102) pour couper, grâce à l'activation du circuit relais (103), un circuit de sécurité (20) de l'installation d'ascenseur (10) ou une tension de commande de la commande d'entraînement (12) afin d'arrêter ainsi l'installation d'ascenseur (10),
- et une horloge (T2) qui est reliée à l'entrée de signal de marche (AF) et à la première entrée de signal de frein (KB) de telle sorte qu'après l'application d'un signal de marche (af), une fenêtre de temps (tA) démarre et qu'au cas où aucun signal de desserrage de frein (kb) n'est appliqué à l'intérieur de la fenêtre de temps, le microprocesseur (102) et, ainsi, le circuit relais (103), puissent être activés.

11. Moniteur de frein (100) selon la revendication 10, **caractérisé en ce qu'**il comporte une seconde entrée de signal de frein (KB1) pour relier le moniteur de frein (100) à un second contact électrique de frein (K2) du système de frein (13).

12. Moniteur de frein (100) selon la revendication 10 ou 11, **caractérisé en ce que** le moniteur de frein (100), en étant commandé par le microprocesseur (102), vérifie qu'après l'application d'un premier signal de marche (af) à l'entrée de signal de marche (AF) un signal de desserrage de frein (kb, kb1) est appliqué ou non au moins à l'une des entrées de signal de frein (KB, KB1), étant précisé que ce signal de desserrage de frein (kb, kb1) survient si le système de frein (13), respectivement un frein du système de frein (13), a été desserré.

13. Moniteur de frein (100) selon la revendication 12, **caractérisé en ce qu'**il attend un signal de desserrage de frein (kb, kb1) à l'intérieur d'une fenêtre de temps prédéfinie (tA), après l'entrée d'un signal de marche (af) à la première entrée de signal de marche (AF), étant précisé que l'activation du circuit relais (103) a lieu si aucun signal de desserrage de frein (kb, kb1) n'est appliqué ou si aucun signal de desserrage de frein (kb, kb1) n'est appliqué à l'intérieur de la fenêtre de temps (tA).

14. Moniteur de frein (100) selon l'une des revendications 10 à 13, **caractérisé en ce que** l'entrée de signal de marche (AF) du moniteur de frein (100) est reliée à la première ligne électrique de signal de marche (12.1) et une seconde entrée de signal de marche (AF1) est reliée à une seconde ligne électrique de signal de marche (12.2) de la commande d'entraînement (12), étant précisé que le moniteur de frein (100) relie par une opération OU un premier signal de sens de marche (af) de la première ligne électrique de signal de marche (12.1) à un second signal de sens de marche (af1) de la seconde ligne électrique de signal de marche (12.2), afin de fournir un signal d'information (AF_info) dès que l'une au moins des lignes de signal de marche (12.1, 12.2) indique un 1 logique comme signal de marche (af, af1).

15. Procédé pour équiper ou moderniser une installation d'ascenseur (10) existante, avec les étapes suivantes :
- montage d'un moniteur de frein (100) séparé selon l'une au moins des revendications 12 à 14 précédentes dans l'installation d'ascenseur (10) existante,
- liaison de la première entrée de signal de frein (KB) du moniteur de frein (100) à un premier contact électrique de frein (K1) du système de frein (13),
- liaison de l'entrée de signal de marche (AF) du moniteur de frein (100) à une première ligne électrique de signal de marche (12.1) de la commande d'entraînement (12),
- liaison de l'alimentation en courant (101) pour doter le moniteur de frein (100) d'au moins une tension de fonctionnement (VCC),
- liaison du circuit relais (103) du moniteur de frein (100) à un circuit de sécurité (20) de l'installation d'ascenseur ou à une tension de commande de la commande d'entraînement (12).
